# EUROPÄISCHE PATENTSCHRIFT

(11) **EP 4 466 437 B1**
(45) Veröffentlichungstag und Bekanntmachung des Hinweises auf die Patenterteilung: **31.12.2025**
(21) Anmeldenummer: 23700994.9
(22) Anmeldetag: 16.01.2023
(51) Int. Cl.: E05F 15/622

(54) **ANTRIEBSEINHEIT**
DRIVE UNIT
UNITÉ D'ENTRAÎNEMENT

(30) Priorität: 17.01.2022 DE 102022101005
(43) Veröffentlichungstag der Anmeldung: 27.11.2024
(73) Patentinhaber: Brose Fahrzeugteile SE & Co. Kommanditgesellschaft, Bamberg, 96052 Bamberg (DE)
(72) Erfinder: SCHNEIDERBANGER, Michael, 96179 Rattelsdorf (DE); MATHES, Detlev, 96274 Itzgrund (DE); BÜHNER, Andreas, 96050 Bamberg (DE); HÄLBIG, Frank, 96052 Bamberg (DE)
(74) Vertreter: Gottschald Patentanwälte Partnerschaft mbB
(86) Internationale Anmeldenummer: PCT/EP2023/050821
(87) Internationale Veröffentlichungsnummer: WO 2023/135281

(56) Entgegenhaltungen:
- DE-A1- 102019 130 651
- US-B2- 10 738 526

## Beschreibung

Die Erfindung betrifft eine Antriebseinheit für einen Antrieb zur Verstellung eines Verstellelements eines Kraftfahrzeugs gemäß dem Oberbegriff von Anspruch 1, einen Antrieb zur Verstellung eines Verstellelements eines Kraftfahrzeugs gemäß Anspruch 13 und ein Verfahren zur Herstellung einer Antriebseinheit gemäß Anspruch 14.

Der Begriff "Verstellelement" ist vorliegend weit zu verstehen. Er umfasst beispielsweise Klappen wie Heckklappen, Heckdeckel, Motorhauben, Seitentüren, Laderaumklappen, Schiebetüren oder dergleichen eines Kraftfahrzeugs.

Der bekannte Antrieb (DE 10 2019 130 651 A1), von dem die Erfindung ausgeht, ist zur Verstellung einer Heckklappe eines Kraftfahrzeugs als Spindelantrieb ausgestaltet. Der Antrieb weist eine Antriebseinheit mit einer dynamischen Einheit und einem Kabelmodul und ein mit der Antriebseinheit antriebstechnisch gekoppeltes Vorschubgetriebe in Form eines Spindel-Spindelmuttergetriebes auf. Die dynamische Einheit weist in einem rohrartigen Antriebseinheitsgehäuse einen Antriebsmotor, ein nachgeschaltetes Untersetzungsgetriebe und gegebenenfalls eine Zusatzkomponente, wie beispielsweise eine Bremseinrichtung, auf. Die Antriebskomponenten werden dann in das Antriebseinheitsgehäuse eingeschoben, bis eine dieser Antriebskomponenten mit einem Halteelement in axialen Eingriff kommt, wodurch die dynamische Einheit gebildet wird. Im Anschluss wird wenigstens ein Kabel mit dem Antriebsmotor und/oder eine Leitung mit der Motorplatine verbunden, um diesen elektrisch mit dem Bordnetz des Kraftfahrzeuges und/oder einer Motorplatine zu verbinden. Anschließend wird ein Platinenhalter mit der Motorplatine auf den Antriebsmotor aufgeschoben. Zum Abschluss wird ein Kabelmoduldeckel des Kabelmoduls auf das Antriebseinheitsgehäuse aufgesetzt und der Kabelmoduldeckel wird mit dem Antriebseinheitsgehäuse verprägt, wodurch die dynamische Einheit mit dem Kabelmodul verbunden wird. Die Antriebskomponenten sind dann zwischen dem Halteelement und dem Kabelmoduldeckel im Antriebseinheitsgehäuse axialfest gehalten. Der Kabelmoduldeckel liegt dann axial gegen den Platinenhalter an, der wiederum gegen den Antriebsmotor anliegt. Um eine Übertragung von Vibrationen vom Antriebsmotor oder dem Platinenhalter auf den Kabelmoduldeckel zu dämpfen, ist der Platinenhalter dreiteilig ausgeführt, wobei ein Platinenunterteil und ein Platinenoberteil jeweils als Hartkomponente ausgeführt sind und ein Verbindungsteil aus einer Weichkomponente in axialer Richtung zwischen den beiden Platinenhalterteilen angeordnet ist.

Es handelt sich hierbei um eine besonders kompakte Bauform eines Antriebs zur Verstellung eines Verstellelements eines Kraftfahrzeugs. Eine Herausforderung besteht allerdings darin, dass sich die elektrische Kontaktierung des Antriebsmotors durch das manuelle Verbinden mit einer oder mehreren Leitungen aufwendig gestaltet. Gleichzeitig ist der Aufbau des dreiteiligen Platinenhalters komplex ausgeführt.

Die US 10 738 526 B2 offenbart auch eine Antriebseinheit mit Kabelmodul und Motorplatine.

Der Erfindung liegt das Problem zugrunde, die bekannte Antriebseinheit derart auszugestalten und weiterzubilden, dass eine möglichst einfache Montage bei einer guten akustischen Dämpfung zwischen dem Antriebsmotor und dem Kabelmoduldeckel ermöglicht wird.

Das obige Problem wird bei einer Antriebseinheit mit den Merkmalen des Oberbegriffs von Anspruch 1 durch die Merkmale des kennzeichnenden Teils von Anspruch 1 gelöst.

Wesentlich ist die grundsätzliche Überlegung, das Kabelmodul zunächst vorzumontieren. Eine solche vormontierte Funktionseinheit lässt sich dann jeweils besonders einfach transportieren und handhaben. Gleichzeitig wird die Montage der Antriebseinheit vereinfacht, da die einzelnen Bauteile des Kabelmoduls bereits als Einheit zueinander fixiert sind. Wesentlich ist weiterhin die grundsätzliche Überlegung, dass zunächst der Platinenhalter und der Kabelmoduldeckel axialfest und insbesondere drehfest miteinander verbunden sind. In diesem Montagezustand kann das vormontierte Kabelmodul in einfacher Weise im Rahmen der Montage der Antriebseinheit durch eine Montagebewegung mit der dynamischen Einheit zusammengeführt werden. Durch die Montagebewegung wird der Kabelmoduldeckel von dem Platinenhalter entkoppelt, das heißt Kabelmoduldeckel und Platinenhalter sind nicht mehr miteinander in Kontakt, so dass durch diese Montage gleichzeitig eine akustische Entkopplung zwischen dem Kabelmoduldeckel und dem Platinenhalter erreicht wird. Somit kann die vormontierte Funktionseinheit des Kabelmoduls auf einfache Weise mit der dynamischen Einheit zusammengeführt werden, während gleichzeitig eine akustische Entkopplung zwischen dem Kabelmoduldeckel und dem Platinenhalter erfolgt.

Im Einzelnen wird ganz allgemein vorgeschlagen, dass das Kabelmodul als vormontierte Funktionseinheit ausgestaltet ist, dass im Rahmen der Montage der Antriebseinheit durch eine Montagebewegung das vormontierte Kabelmodul mit der dynamischen Einheit zusammenführbar ist, dass durch die Montagebewegung das Kabelmodul von einem Montagezustand, in dem der Kabelmoduldeckel axialfest und insbesondere drehfest mit dem Platinenhalter verbunden ist, in einen Entkopplungszustand, in dem der Kabelmoduldeckel von dem Platinenhalter entkoppelt ist, wobei der Kabelmoduldeckel und der Platinenhalter zur Erreichung einer akustische Entkopplung zwischen Kabelmoduldeckel und Platinenhalter nicht mehr miteinander in Kontakt sind, bringbar ist.

Nach der Ausgestaltung gemäß Anspruch 2 erfolgt durch die Montagebewegung auch eine elektrische Verbindung des Antriebsmotors mit der Motorplatine und/oder mit einer oder mehreren Leitungen. Somit wird durch die Montagebewegung in vorteilhafter Weise eine weitere Funktion bewirkt, nämlich die elektrische Kontaktierung des Antriebsmotors mit dem Kabelmodul. Es ist einerseits möglich, dass die elektrische Verbindung des Antriebsmotor zeitlich überlappend mit der Entkopplung zwischen dem Kabelmoduldeckel und dem Platinenhalter erfolgt, wodurch eine geringe Länge der durchzuführenden Montagebewegung erzielt werden kann (Anspruch 3). Alternativ ist es auch möglich, dass zunächst in einem ersten Abschnitt der Montagebewegung die elektrische Verbindung des Antriebsmotors und anschließend in einem zweiten Abschnitt der Montagebewegung die Entkopplung zwischen dem Kabelmoduldeckel und dem Platinenhalter erfolgt (Anspruch 4).

In der Ausgestaltung gemäß Anspruch 5 ist das Antriebseinheitsgehäuse im montierten Zustand mit dem Kabelmoduldeckel durch eine kraft-, stoff- und/oder formschlüssige Verbindung und somit in besonders einfacher Weise axialfest verbunden. Im Rahmen der Montagebewegung ist der Kabelmoduldeckel vorzugsweise wenigstens abschnittsweise axial in das Antriebseinheitsgehäuse einschiebbar oder axial auf das Antriebseinheitsgehäuse aufschiebbar, wodurch eine einfach durchzuführende wenigstens abschnittsweise rein linear ausgerichtete Montagebewegung realisiert ist. Zusätzlich oder alternativ kann die Montagebewegung oder ein Abschnitt der Montagebewegung zusätzlich zu einer axialen aber auch eine radiale und/oder eine tangentiale Komponente aufweisen.

Gemäß Anspruch 6 lässt sich die elektrische Verbindung zwischen dem Kabelmodul und dem Antriebsmotor auf einfache Weise dadurch herstellen, dass ein elektrischer Anschlussstecker des Kabelmoduls mit einem korrespondieren Anschlussteil des Antriebsmotors durch das Zusammenführen der Funktionseinheit Kabelmodul mit der dynamischen Einheit elektrisch verbunden wird.

Eine vorteilhafte Entkopplung zwischen dem Kabelmoduldeckel und dem Platinenhalter ist gemäß Anspruch 7 realisiert, indem der Platinenhalter im montierten Zustand in einer axialen Richtung gegen den Antriebsmotor und in der anderen axialen Richtung über ein Dämpfungselement gegen den Kabelmoduldeckel anliegt.

Nach der Ausgestaltung gemäß Anspruch 8 ist im Rahmen einer Vormontage des Kabelmoduls der Platinenhalter mit dem Kabelmoduldeckel in vorteilhafter Weise axialfest und drehfest verbindbar, wodurch eine einfache Vormontage des Kabelmoduls realisiert wird. Alternativ ist es in vorteilhafter Weise denkbar, dass der Kabelmoduldeckel und der Platinenhalter im Montagezustand einstückig miteinander ausgebildet sind und insbesondere eine Sollbruchstelle aufweisen (Anspruch 9).

Anspruch 10 definiert bevorzugte Werte des erforderlichen Kraftbedarfs zur Durchführung der Montagebewegung.

Nach der Ausgestaltung gemäß Anspruch 11 ist die aufzubringende Kraft, also der Kraftbedarf, zur Durchführung der Montagebewegung während des ersten Abschnitts geringer als während oder zumindest zu Beginn des zweiten Abschnitts der Montagebewegung. Auf diese Weise kann sichergestellt werden, dass die Entkopplung zwischen dem Platinenhalter und dem Kabelmodul erst nach der elektrischen Verbindung des Antriebsmotors erfolgt, wodurch die Montage einfach gehalten und besonders sicher durchführbar ist.

Nach der bevorzugten Ausgestaltung gemäß Anspruch 12 weist der Platinenhalter eine Zugentlastung für die Leitungen des Kabelmoduls auf. Die Funktionsdichte wird somit in vorteilhafter Weise erhöht. Es ist dann nicht notwendig eine Zugentlastung außerhalb der Antriebseinheit vorzusehen.

Nach einer weiteren Lehre gemäß Anspruch 13, der eigenständige Bedeutung zukommt, ist ein Antrieb zur Verstellung eines Verstellelements eines Kraftfahrzeuges beansprucht, wobei der Antrieb eine vorschlagsgemäße Antriebseinheit aufweist, wobei der Antrieb ein mit der Antriebseinheit antriebstechnisch gekoppeltes Vorschubgetriebe, insbesondere Spindel-Spindelmuttergetriebe, zur Erzeugung von Antriebsbewegungen entlang einer geometrischen Antriebsachse zwischen einem ersten Antriebsanschluss und einem zweiten Antriebsanschluss aufweist. Auf alle Ausführungen zur vorschlagsgemäßen Antriebseinheit darf insoweit verwiesen werden.

Nach einer weiteren Lehre gemäß Anspruch 14, der ebenfalls eigenständige Bedeutung zukommt, ist ein Verfahren zur Montage einer Antriebseinheit für einen erfindungsgemäßen Antrieb, insbesondere Spindelantrieb, zur Verstellung eines Verstellelements eines Kraftfahrzeugs entlang einer geometrischen Antriebsachse beansprucht, wobei im montierten Zustand die Antriebseinheit eine dynamische Einheit mit einem Antriebsmotor, ein Kabelmodul mit einer Motorplatine, die mit dem Antriebsmotor elektrisch verbunden ist, sowie ein Antriebseinheitsgehäuse zur Aufnahme zumindest des Antriebsmotors und des Kabelmoduls aufweist, wobei das Kabelmodul zur Fixierung der Motorplatine einen Platinenhalter und einen Kabelmoduldeckel, in den ein oder mehrere Leitungen zur elektrischen Verbindung mit dem Antriebsmotor und/oder der Motorplatine führen, sowie einen ersten Antriebsanschluss, der mit dem Kabelmoduldeckel verbunden ist, und eine geometrische Kabelmodulachse aufweist, wobei die dynamische Einheit mit dem Kabelmodul axialfest verbunden ist. Auf alle Ausführungen zur vorschlagsgemäßen Antriebseinheit und zum vorschlagsgemäßen Antrieb darf insoweit verwiesen werden.

Im Einzelnen wird ganz allgemein vorgeschlagen, dass das Kabelmodul als Funktionseinheit vormontiert wird, dass im vormontierten Zustand des Kabelmoduls der Kabelmoduldeckel axialfest und insbesondere drehfest mit einem Platinenhalter verbunden ist, dass durch eine Montagebewegung das vormontierte Kabelmodul mit der dynamischen Einheit zusammengeführt wird und, insbesondere hierdurch, der Antriebsmotor mit der Motorplatine und/oder einer oder mehreren Leitungen elektrisch verbunden und der Kabelmoduldeckel von dem Platinenhalter entkoppelt wird.

Im Folgenden wird die Erfindung anhand einer lediglich Ausführungsbeispiele darstellenden Zeichnung näher erläutert. In der Zeichnung zeigt
- Fig. 1: den Heckbereich eines Kraftfahrzeugs mit einem vorschlagsgemäßen Antrieb, der eine vorschlagsgemäße Antriebseinheit aufweist,
- Fig. 2: den Antrieb gemäß Fig. 1 mit einem Ausführungsbeispiel einer Antriebseinheit in seiner a) eingefahrenen Stellung und b) ausgefahrenen Stellung,
- Fig. 3: ein Kabelmodul der Antriebseinheit gemäß Fig. 2 in a) einem nicht vormontierten Zustand, in dem der Kabelmoduldeckel und der Platinenhalter nicht verbunden sind, b) einer teilgeschnittenen Ansicht des Kabelmoduldeckels und Platinenhalter in dem nicht vormontierten Zustand, c) einem Montagezustand, in dem der Kabelmoduldeckel und der Platinenhalter axialfest miteinander verbunden sind, und d) einer teilgeschnittenen Ansicht im Montagezustand,
- Fig. 4: das Kabelmodul der Antriebseinheit gemäß Fig. 3 in a) einer teilgeschnittenen Ansicht im Montagezustand, b) einer teilgeschnittenen Ansicht in einem Entkopplungszustand, in dem der Kabelmoduldeckel vom Platinenhalter entkoppelt ist und c) einer perspektivischen Ansicht im Montagezustand und
- Fig. 5: in einer schematischen Darstellung das Kabelmodul in a) einer ersten Ausführungsform im Montagezustand, b) der ersten Ausführungsform im Entkopplungszustand, c) einer zweiten Ausführungsform im Montagzustand und d) der zweiten Ausführungsform im Entkopplungszustand.

Die in den Figuren dargestellte Antriebseinheit 1 ist Bestandteil eines Antriebs 2, hier eines Spindelantriebs, zur Verstellung eines Verstellelements 3 eines Kraftfahrzeugs. Bei dem Verstellelement 3 handelt es sich hier und vorzugsweise um eine Heckklappe. Alle Ausführungen zu einer Heckklappe gelten vorliegend auch für alle anderen Arten von Verstellelementen 3 eines Kraftfahrzeugs. Insoweit darf auf die beispielhafte Aufzählung im einleitenden Teil der Beschreibung verwiesen werden.

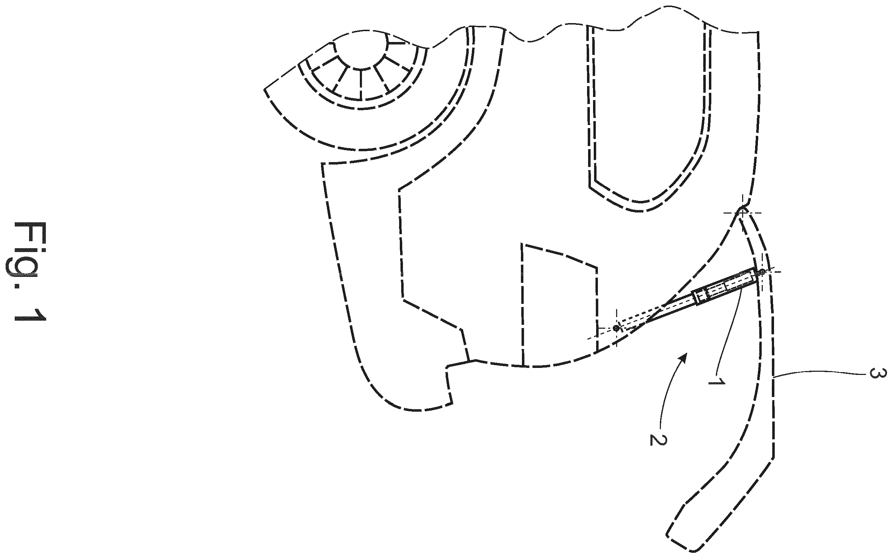

Der Antrieb 2 dient der Verstellung der Heckklappe. Hierfür ist der Antrieb 2 an der Kraftfahrzeugkarosserie einerseits und an dem Verstellelement 3 andererseits angelenkt. Der Antrieb 2 erzeugt hier und vorzugsweise lineare Antriebsbewegungen entlang einer geometrischen Antriebsachse A, so dass sich das Verstellelement 3 zwischen einer Schließstellung und der in Fig. 1 dargestellten Offenstellung verstellen lässt. Diese Verstellung erfolgt mittels einer dynamischen Einheit 4 mit einem elektrischen Antriebsmotor 5, der eine die Verstellung des Verstellelements 3 hervorrufende Antriebskraft erzeugt.

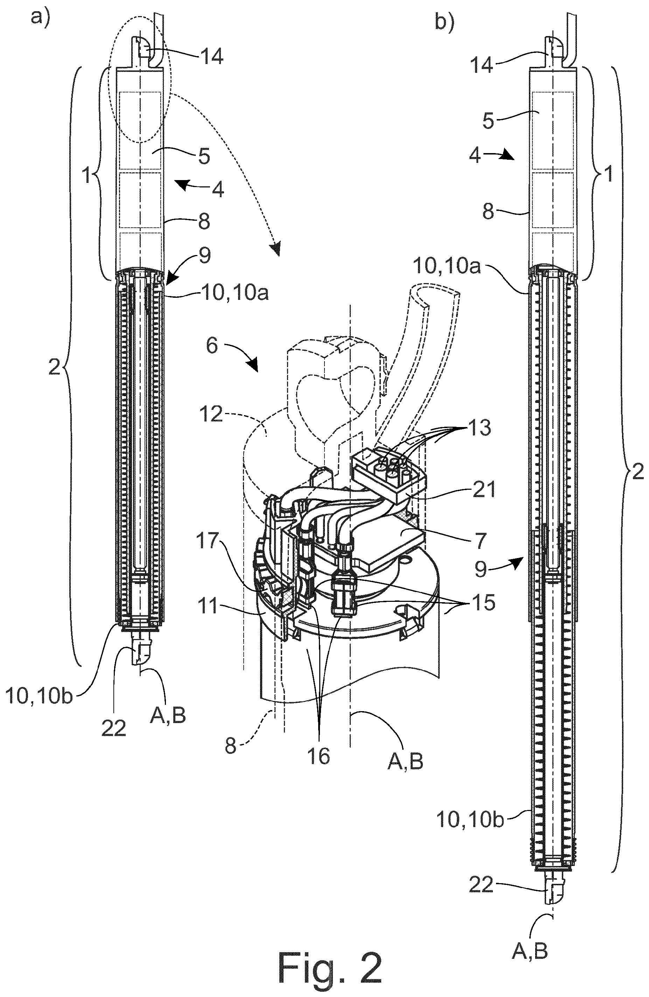

Weiter weist die Antriebseinheit 1, wie in den Ansichten in Fig. 2 dargestellt ist, ein Kabelmodul 6 mit einer Motorplatine 7 auf. Die Motorplatine 7 kann direkt mit dem Antriebsmotor 5 elektrisch verbunden sein oder über eine nicht dargestellte Motorsteuerung mit dem Antriebsmotor 5 elektrisch verbunden sein. Der Antriebsmotor 5 der Antriebseinheit 1 ist in einem Antriebseinheitsgehäuse 8 angeordnet, das in den Fig. 2a) und b) im oberen Abschnitt des Antriebs 2 ungeschnitten dargestellt ist. Das Antriebseinheitsgehäuse 8 der Antriebseinheit 1 dient dabei auch zur wenigstens teilweisen Aufnahme des Kabelmoduls 6.

Der Begriff "Motorplatine" ist vorliegend weit zu verstehen. Er umfasst sowohl Platinen aus Einzellagen, als auch Platinen aus Multilagen. Er umfasst weiter starre, flexible und starr-flexible Platinen. Eine solche Platine kann entsprechend auch als Folienleiter ausgestaltet sein. Eine Motorplatine im obigen Sinne weist regelmäßig Leiterbahnen und elektrische und/oder elektronische Bauelemente auf. Die Bauelemente können beispielsweise auf die Platine im Übrigen aufgelötet, aufgeklebt, aufgespritzt oder dergleichen sein. Eine solche Motorplatine 7 kann zur Ansteuerung des Antriebsmotors 5 und/oder weiterer Komponenten der Antriebseinheit 1 und/oder des Antriebs 2 dienen.

Hier und vorzugsweise weist die Antriebseinheit 1, dem Antriebsmotor 5 antriebstechnisch nachgeschaltet, noch eine oder mehrere weitere Antriebseinheitskomponenten wie ein Zwischengetriebe, beispielsweise Planetengetriebe, eine Bremse, eine Kupplung oder dergleichen auf, wobei diese Antriebseinheitskomponenten jeweils zusammen mit dem Antriebsmotor 5 ebenfalls in dem Antriebseinheitsgehäuse 8 angeordnet sein können.

Der Antriebseinheit 1 ist ferner ein Vorschubgetriebe 9 antriebstechnisch nachgeschaltet. Das Vorschubgetriebe 9 ist in einem Außengehäuse 10 des Antriebs 2 angeordnet. Das Außengehäuse 10 ist hier teleskopierbar und insbesondere rohrartig ausgestaltet. Dazu weist das Außengehäuse 10 ein äußeres, insbesondere rohrartiges Gehäuseteil 10a und ein inneres, insbesondere rohrartiges Gehäuseteil 10b auf, wie Fig. 2b) beispielhaft zeigt. Der Begriff "teleskopierbar" bedeutet in diesem Zusammenhang, dass das äußere Gehäuseteil 10a und das innere Gehäuseteil 10b relativ zueinander in axialer Richtung verschiebbar sind, wobei das innere Außengehäuseteil 10b in dem äußeren Außengehäuseteil 10a geführt ist. Das Außengehäuse 10 ist hier und vorzugsweise in axialer Richtung und in Umfangsrichtung um die geometrische Antriebsachse A mit dem Antriebseinheitsgehäuse 8 verbunden. Unter "verbunden" ist vorliegend stoff-, kraft- und/oder formschlüssig verbunden zu verstehen. Mit "axial" ist vorliegend die Richtung der geometrischen Antriebsachse A gemeint.

Das Kabelmodul 6 weist zur Fixierung der Motorplatine 7 einen Platinenhalter 11 auf. Durch den Platinenhalter 11 kann die Motorplatine 7 gegenüber dem Kabelmodul 6 im Übrigen einerseits radial und andererseits axial, insbesondere in beide Richtungen axial, fixiert werden.

Das Kabelmodul 6 weist einen Kabelmoduldeckel 12 auf, in den, von außerhalb der Antriebseinheit 1, eine oder mehrere Leitungen 13 zur elektrischen Verbindung mit dem Antriebsmotor 5 und/oder der Motorplatine 7 führen. Das Kabelmodul 6 weist eine geometrische Kabelmodulachse B auf, die im montierten Zustand der Antriebseinheit 1 (Fig. 2) koaxial zur geometrischen Antriebsachse A angeordnet ist.

Der Begriff "axial" ist vorliegend, soweit nicht anders ausgeführt, immer auf die geometrische Kabelmodulachse B bezogen. Dasselbe gilt für die Begriffe "radial" und "drehfest".

Mit dem Kabelmoduldeckel 12 ist das Antriebseinheitsgehäuse 8 im montierten Zustand (Fig. 2) der Antriebseinheit 1 axialfest verbunden. Hier und vorzugsweise greift das Antriebseinheitsgehäuse 8 unmittelbar am Kabelmoduldeckel 12 an.

Der Platinenhalter 11 ist im montierten Zustand in einem axialen Abschnitt des Antriebseinheitsgehäuses 8 angeordnet, der axial zwischen dem Antriebsmotor 5 und einem Antriebsanschluss 14 liegt. Der Kabelmoduldeckel 12 ist vorzugsweise ein Bauteil, das das Antriebseinheitsgehäuse 8 axial zum ersten Antriebsanschluss 14, insbesondere dichtend, verschließt.

Wesentlich ist nun, dass das Kabelmodul 6 als vormontierte Funktionseinheit ausgestaltet ist, dass im Rahmen der Montage der Antriebseinheit 1 durch eine Montagebewegung das vormontierte Kabelmodul 6 mit der dynamischen Einheit 4 zusammenführbar ist, dass durch die Montagebewegung das Kabelmodul 6 von einem Montagezustand, in dem der Kabelmoduldeckel 12 axialfest und insbesondere drehfest mit dem Platinenhalter 11 verbunden ist, in einen Entkopplungszustand, in dem der Kabelmoduldeckel 12 von dem Platinenhalter 11 entkoppelt ist, bringbar ist.

"Vormontiert" bedeutet vorliegend, dass die einzelnen Bauteile bereits als Einheit zueinander fixiert sind.

Der Begriff "Funktionseinheit" bedeutet, dass die vormontierte Einheit alle für die jeweilige Funktionalität erforderlichen Komponenten aufweist. Unter dem Begriff "Funktionseinheit" ist also vorliegend in Bezug auf das Kabelmodul 6 zu verstehen, dass dieses alle für die Bereitstellung einer elektrischen Verbindung mit der dynamischen Einheit 4 erforderlichen Komponenten aufweist.

Der Begriff "zusammenführbar" ist vorliegend unabhängig von der Richtung, in der die Funktionseinheiten miteinander verbunden werden, zu verstehen. Insbesondere umfasst dies, dass die Funktionseinheiten axial zusammensteckbar sind. Vorzugsweise ist das Kabelmodul 6 wenigstens abschnittsweise axial in die dynamische Einheit 4 einschiebbar oder axial auf diese aufschiebbar.

Unter dem Begriff "entkoppelt" ist vorliegend zu verstehen, dass der Kabelmoduldeckel 12 und der Platinenhalter 11 nicht unmittelbar miteinander verbunden sind und/oder nicht unmittelbar miteinander in Eingriff stehen. Folglich stehen der Kabelmoduldeckel 12 und der Platinenhalter 11 im Entkopplungszustand nicht unmittelbar miteinander in Eingriff, so dass eine direkte Übertragung von Schwingungen und Vibrationen nicht möglich ist, wodurch die akustische Entkopplung verbessert wird.

Aufgrund der Ausbildung als separate Funktionseinheit, kann das Kabelmodul 6 unabhängig von der dynamischen Einheit 4 vormontiert werden, wobei die jeweiligen Komponenten des Kabelmoduls 6 zueinander gesichert sind, ohne dass hierfür eine Verbindung zwischen der dynamischen Einheit 4 und dem Kabelmodul 6 notwendig ist. Zusätzlich wird die Montage der Antriebseinheit 1 vereinfacht, da die dynamische Einheit 4 und das Kabelmodul 6 auf einfache Weise zusammenführbar sind.

Die Montagebewegung bewirkt, wie bereits dargelegt, eine Entkopplung zwischen dem Platinenhalter 11 und dem Kabelmoduldeckel 12, wodurch die Montage auf einfache Weise ermöglicht wird. Die Montage kann weiter vereinfacht werden, wenn im Rahmen der Montage der Antriebseinheit 1 durch die Montagebewegung eine elektrische Verbindung des Antriebsmotors 5 mit der Motorplatine 7 und/oder einer oder mehreren Leitungen 13 und die Entkopplung zwischen dem Platinenhalter 11 und dem Kabelmoduldeckel 12 erfolgt. Somit erfüllt die Montagebewegung zwei Funktionen, nämlich zum einen die elektrische Verbindung des Antriebsmotors 5 mit der Motorplatine 7 und/oder einer oder mehreren Leitungen 13 und zum anderen auch die Entkopplung zwischen dem Platinenhalter 11 und dem Kabelmoduldeckel 12. Hier und vorzugsweise ist die Motorplatine 7 bereits im vormontierten Zustand mit wenigstens einer Leitung 13 elektrisch verbunden, so dass im Rahmen der Montagebewegung der Antriebsmotor 5 jedenfalls mit wenigstens einer Leitung 13 elektrische verbunden wird. In den Figuren ist lediglich die elektrische Verbindung zwischen dem Antriebsmotor 5 und wenigstens einer Leitung 13 und die elektrische Verbindung zwischen der Motorplatine 7 und wenigstens einer Leitung 13 gezeigt. Der Antriebsmotor 5 kann dann über die nicht gezeigte Motorsteuerung elektrisch mit der Motorplatine 7 verbunden sein. Es ist jedoch auch möglich, dass alternativ oder zusätzlich eine direkte elektrische Verbindung zwischen dem Antriebsmotor 5 und der Motorplatine 7 durch die Montagebewegung bewirkt wird.

Es ist möglich, dass die elektrische Verbindung des Antriebsmotors 5 mit der Motorplatine 7 und/oder einer oder mehreren Leitungen 13 im Wesentlichen zeitlich überlappend mit der Entkopplung zwischen dem Platinenhalter 11 und dem Kabelmoduldeckel 12 erfolgt. Um die aufzubringende Kraft für die beiden vorgenannten Funktionen aufzuteilen ist es alternativ auch möglich, dass in einem ersten Abschnitt der Montagebewegung eine elektrische Verbindung des Antriebsmotors 5 mit der Motorplatine 7 und/oder einer oder mehreren Leitungen 13 erfolgt und dass in einem auf den ersten Abschnitt folgenden zweiten Abschnitt der Montagebewegung die Entkopplung zwischen dem Platinenhalter 11 und dem Kabelmoduldeckel 12 erfolgt. Es muss dann während des ersten Abschnitts der Montagebewegung lediglich die Kraft zur elektrischen Anbindung des Antriebsmotors 5 und während des zweiten Abschnitts die Kraft zur Entkopplung zwischen dem Platinenhalter 11 und dem Kabelmoduldeckel 12 aufgebracht werden.

Es ist vorzugsweise vorgesehen, dass der Kabelmoduldeckel 12 im montierten Zustand der Antriebseinheit 1 durch eine kraft-, stoff- und/oder formschlüssige Verbindung mit dem Antriebseinheitsgehäuse 8 axialfest und insbesondere drehfest verbunden ist. Hier und vorzugsweise ist es weiter so, dass der Kabelmoduldeckel 12 im Rahmen der Montagebewegung wenigstens abschnittsweise axial in das Antriebseinheitsgehäuse 8 einschiebbar oder axial auf das Antriebseinheitsgehäuse 8 aufschiebbar ist. Mit "wenigstens abschnittsweise axial" ist gemeint, dass die Montagebewegung zumindest über einen Abschnitt der Montagebewegung oder über die gesamte Montagebewegung rein axial gerichtet ist. Auf diese Weise kann die Montagebewegung in besonders einfacher Weise erfolgen. Die Montagebewegung oder ein Abschnitt der Montagebewegung kann auch, zusätzlich oder alternativ, zusätzlich zu einer axialen eine radiale und/oder eine tangentiale Komponente aufweisen, so dass die Montagebewegung beispielsweise wenigstens abschnittsweise eine Schraubbewegung ist. Es ist aber besonders vorteilhaft, wenn die Montagebewegung ausschließlich in axialer Richtung erfolgt.

Wie die Detailansicht der Fig. 2a) zeigt, ist vorzugsweise vorgesehen, dass der Platinenhalter 11 wenigstens einen elektrischen Anschlussstecker 15, der mit wenigstens einer Leitung 13 des Kabelmoduls 6 elektrisch verbunden ist, aufweist, und dass das Zusammenführen des Kabelmoduls 6 mit der dynamischen Einheit 4 eine elektrische Verbindung zwischen dem elektrischen Anschlussstecker 15 und einem korrespondierenden Anschlussteil 16 des Antriebsmotors 5 bewirkt. Auf diese Weise bewirkt das Einschieben des Kabelmoduldeckels 12 in das Antriebseinheitsgehäuse 8 oder das Aufschieben des Kabelmoduldeckels 12 auf das Antriebseinheitsgehäuse 8 die elektrische Verbindung des Antriebsmotors 5 mit dem Kabelmodul 6 und gegebenenfalls der Motorplatine 7. Besonders vorteilhaft ist dabei, wenn der Platinenhalter 11 vor dem Einschieben oder Aufschieben des Kabelmoduldeckels 12 mit dem elektrischen Anschlussstecker 15 zum elektrischen Kontaktieren des Antriebsmotors 5 gekoppelt ist.

Zur mechanischen Entkopplung ist vorzugsweise vorgesehen, dass der Platinenhalter 11 im montierten Zustand der Antriebseinheit 1 in einer axialen Richtung gegen den Antriebsmotor 5 und in der anderen axialen Richtung über ein Dämpfungselement 17 gegen den Kabelmoduldeckel 12 anliegt, wie Fig. 2 zeigt. Das Dämpfungselement 17 kann aus einem Kunststoff, insbesondere einem Elastomer, gebildet sein. Die Auswahl des Materials des Dämpfungselements 17 kann dabei an die gewünschte Dämpfung zwischen dem Platinenhalter 11 und dem Kabelmoduldeckel 12 angepasst werden.

Um ein gutes Kompressionsverhalten des Dämpfungselement 17 zu erzielen, ist in der in den Figuren dargestellten und insoweit bevorzugten Ausführungsform das Dämpfungselement 17 in Umfangsrichtung um die geometrische Kabelmodulachse B wellenförmig ausgestaltet. Auf diese Weise entstehen zwischen dem Platinenhalter 11 und dem Dämpfungselement 17 sowie zwischen dem Kabelmoduldeckel 12 in Umfangsrichtung gleichmäßig verteilte Freiräume, in die das Material des Dämpfungselements 17 im montierten Zustand der Antriebseinheit 1 elastisch gepresst werden kann. Auf diese Weise kann eine besonders gleichmäßige Dämpfung in Umfangsrichtung zwischen dem Kabelmoduldeckel 12 und dem Platinenhalter 11 erzielt werden.

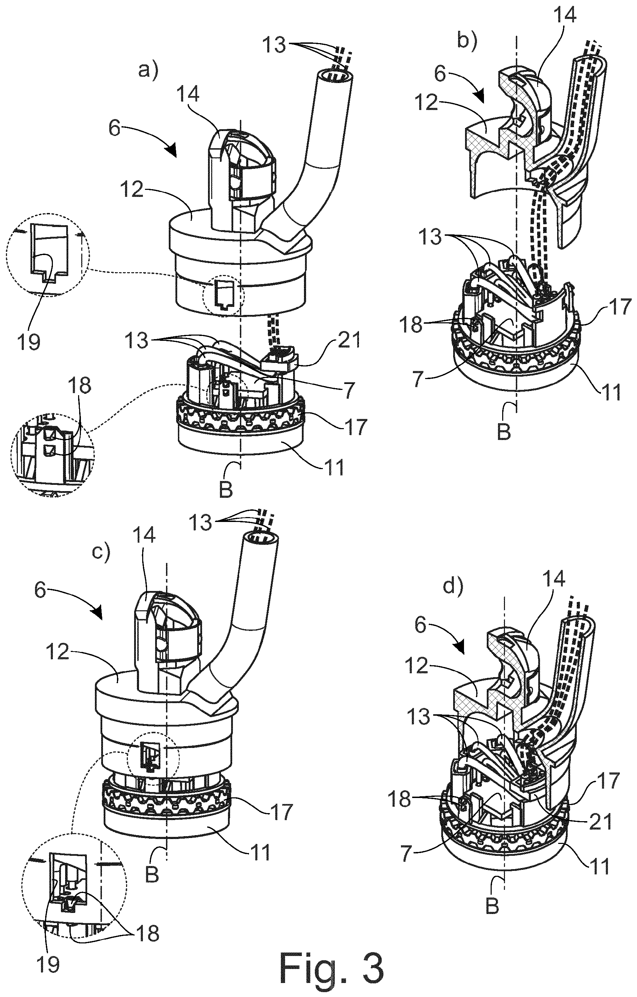

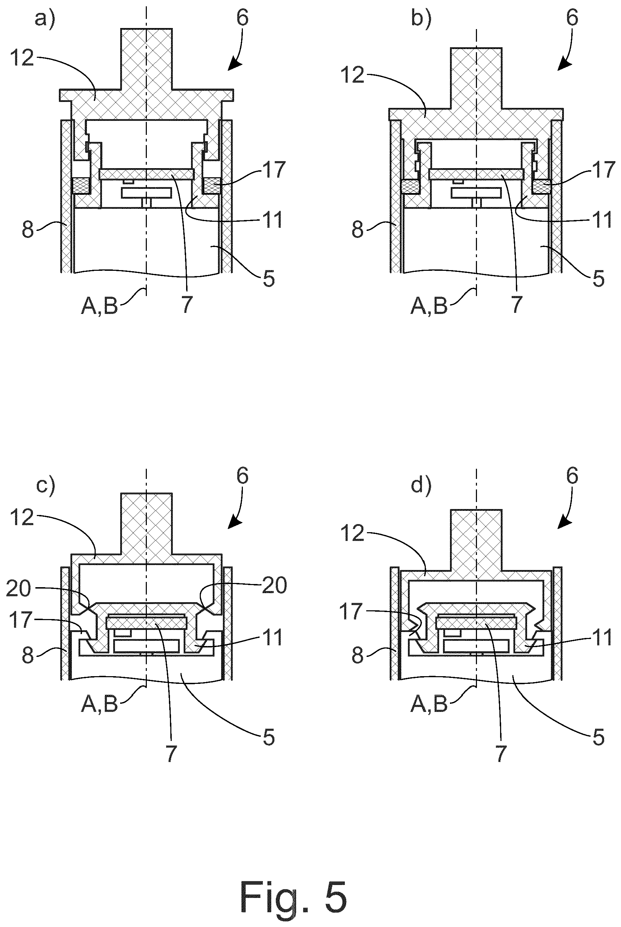

Die Montage der Antriebseinheit 1 kann besonders einfach ausgestaltet werden, wenn im Rahmen einer Vormontage des Kabelmoduls 6 der Kabelmoduldeckel 12 mit dem Platinenhalter 11 zusammenführbar und, insbesondere hierdurch, axialfest und insbesondere drehfest verbindbar ist. In der in Fig. 3, Fig 4, Fig. 5a) und Fig. 5b) gezeigten und insoweit bevorzugten Ausführungsform ist der Kabelmoduldeckel 12 mittels einer Rastverbindung mit dem Platinenhalter 11 axialfest verbindbar. Der Platinenhalter 11 weist dafür wenigstens zwei radial nach außen stehende Rastvorsprünge 18 auf, die in axialer Richtung übereinander angeordnet sind, wie Fig. 3a) zeigt. Diese Rastvorsprünge 18 gelangen im Rahmen der Vormontage mit einer Ausnehmung 19 des Kabelmoduldeckels 12 in Eingriff, wodurch der Platinenhalter 11 axial- und insbesondere drehfest mit dem Kabelmoduldeckel 12 verbunden wird, wir in Fig. 3c) gezeigt ist. Das Kabelmodul 6 ist dann als Funktionseinheit vormontiert und befindet sich im Montagezustand. Es ist alternativ oder zusätzlich auch möglich, den Platinenhalter 11 im Rahmen der Vormontage über einen Presssitz mit dem Kabelmoduldeckel 12 zu verbinden.

Es ist alternativ auch möglich, dass im Montagezustand der Kabelmoduldeckel 12 und der Platinenhalter 11 einstückig miteinander ausgebildet sind, wie in Fig. 5c) gezeigt ist. Dabei ist vorzugsweise wenigstens eine Sollbruchstelle 20 vorgesehen, die eine Verbindung zwischen dem Platinenhalter 11 und dem Kabelmoduldeckel 12 im Montagezustand sicherstellt und gleichzeitig eine Überführung in den Entkopplungszustand ermöglicht, sodass im Entkopplungszustand der Kabelmoduldeckel 12 und der Platinenhalter 11 an der Sollbruchstelle getrennt sind.

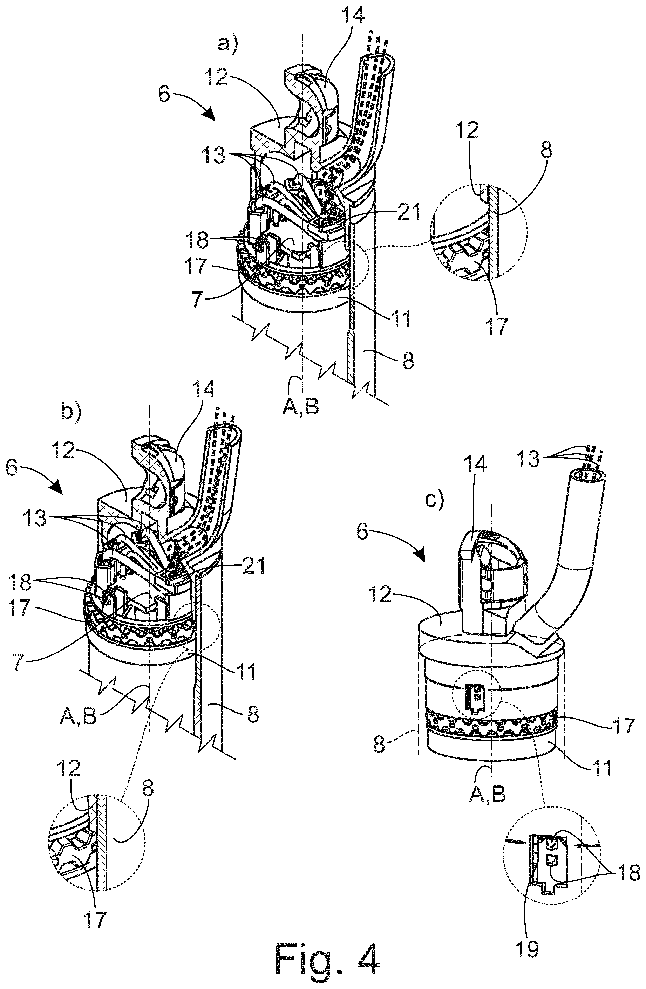

Nach der Vormontage des Kabelmoduls 6 kann das Kabelmodul 6 mit der dynamischen Einheit 4 zusammengeführt werden. Hierzu wird das Kabelmodul 6 wenigstens abschnittsweise in das Antriebseinheitsgehäuse 8, in dem der Antriebsmotor 5 angeordnet ist, eingeführt, wie Fig. 4a), Fig. 5a) und Fig. 5c) zeigen. Das Kabelmodul 6 befindet sich dabei zunächst im Montagezustand. Im Rahmen der Montagebewegung, die hier und vorzugsweise in axialer Richtung erfolgt, wird der Antriebsmotor 5 über den Anschlussstecker 15 und das korrespondierende Anschlussteil 16 mit wenigstens einer Leitung 13 elektrisch auf einem ersten Abschnitt der Montagebewegung verbunden. Dieser Zustand ist in Fig. 4a), Fig. 5a) und Fig. 5c) gezeigt. Während des ersten Abschnitts der Montagebewegung ist der Kabelmoduldeckel 12, in der in Fig. 3, Fig. 4, Fig. 5a) und Fig. 5b) gezeigten und insoweit bevorzugten Ausführungsform, über die Ausnehmung 19 und die Rastvorsprünge 18 axialfest und insbesondere drehfest mit dem Platinenhalter 11 verbunden. In der in Fig. 5c) und Fig. 5d) gezeigten Ausführungsform sind der Kabelmoduldeckel 12 und der Platinenhalter 11 einstückig miteinander ausgebildet.

Der Kabelmoduldeckel 12 wird im Rahmen des zweiten Abschnitts der Montagebewegung in axialer Richtung weiter bewegt, bis dieser in axialer Richtung mit dem Dämpfungselement 17 in Eingriff kommt, wodurch der Antriebsmotor 5 in Richtung des Antriebsanschlusses 14 axialfest gehalten wird. Dabei kann das Dämpfungselement 17 in axialer Richtung komprimiert werden, um eine Vorspannung zu erhalten. Während des zweiten Abschnitts der Montagebewegung wird die Verbindung zwischen dem Platinenhalter 11 und dem Kabelmoduldeckel 12 gelöst, wie beim Übergang von Fig. 3c) auf Fig. 4c), von Fig. 5a) auf Fig. 5b) und von Fig. 5c) auf Fig. 5d) gezeigt ist. In der in Fig. 4c) gezeigten und insoweit bevorzugten Ausführungsform, sind beide Rastvorsprünge 18 derart innerhalb der Ausnehmung 19 angeordnet, dass kein Eingriff zwischen den Rastvorsprüngen 18 und der Ausnehmung 19 vorliegt. Der Platinenhalter 11 steht dann nur noch über das Dämpfungselement 17 mit dem Kabelmoduldeckel 12 in mittelbarem Eingriff, wodurch eine gute akustische Dämpfung erreicht wird. Auf diese Weise wird der Platinenhalter 11 vom Kabelmoduldeckel 12 entkoppelt.

Es muss somit lediglich der Kabelmoduldeckel 12 im Rahmen der Montage wenigstens abschnittsweise in das Antriebseinheitsgehäuse 8 eingeführt oder abschnittsweise auf das Antriebseinheitsgehäuse 8 geführt werden, um eine elektrische Verbindung des Antriebsmotors 5 mit wenigstens einer Leitung 13 und/oder der Motorplatine 7 zu erhalten und den Platinenhalter 11 vom Kabelmoduldeckel 12 zu entkoppeln. Der Kabelmoduldeckel 12 kann im Rahmen der Montagebewegung axialfest und drehfest mit dem Antriebseinheitsgehäuse 8 verbindbar sein, insbesondere form- und/oder kraftschlüssig. So kann zum Beispiel eine Rastverbindung zwischen dem Antriebseinheitsgehäuse 8 und dem Kabelmoduldeckel 12 vorgesehen sein. Alternativ oder zusätzlich kann eine stoffschlüssige Verbindung, insbesondere eine Klebverbindung und/oder eine Schweißverbindung vorgesehen sein.

In der in Fig. 5c) und Fig. 5d) gezeigten und insoweit bevorzugten Ausführungsform ist das Dämpfungselement 17 mit dem Gehäuse des Antriebsmotors 5 verbunden. Unter dem Begriff "verbunden" ist vorliegend eine stoff-, kraft- und/oder formschlüssige Verbindung zu verstehen, der insbesondere auch eine einstückige Ausbildung des Gehäuses des Antriebsmotors 5 mit dem Dämpfungselement 17 umfasst. Das Dämpfungselement 17 ist dabei als Rastverbindungshaken ausgebildet, der im Rahmen der Montagebewegung von einem korrespondierenden Gegenhaken des Platinenhalters 11 überrastet wird, wodurch der Platinenhalter 11 axialfest am Antriebsmotor 5 gehalten ist.

Das Kabelmodul 6 ist, wie bereits dargelegt wurde, auf einfache Weise manuell in den Entkopplungszustand überführbar. Der erforderliche Kraftbedarf bzw. die aufzubringende Kraft zur Durchführung der Montagebewegung beträgt in vorteilhafter Weise 30 N bis 200 N, weiter vorzugsweise 50 N bis 150 N, weiter vorzugsweise 70 N bis 100 N.

Es ist besonders vorteilhaft, wenn die aufzubringende Kraft zur Durchführung der Montagebewegung während des ersten Abschnitts geringer ist als während oder zumindest zu Beginn des zweiten Abschnitts der Montagebewegung. Es ist dann sichergestellt, dass die Verbindung zwischen dem Platinenhalter 11 und dem Kabelmoduldeckel 12 erst dann gelöst wird, wenn der Antriebsmotor 5 mit der Motorplatine 7 und/oder einer oder mehreren Leitungen 13 elektrisch verbunden ist. Gleichzeitig erhält der Nutzer beim Trennen der Verbindung zwischen dem Platinenhalter 11 und dem Kabelmoduldeckel 12 durch den Kraftabfall eine Bestätigung, dass die elektrische Anbindung des Antriebsmotors 5 erfolgt ist.

In der in Fig. 2 bis Fig. 4 gezeigten und insoweit bevorzugten Ausführungsform weist der Platinenhalter 11 ein Fixierelement 21 zu Fixierung der einen oder mehreren Leitungen 13 relativ zum Platinenhalter 11 auf, wodurch eine Zugentlastung der einen oder mehreren Leitungen 13 realisiert ist. Kommt es zu einer Zugbelastung entlang der Leitungen 13 von außerhalb des Kabelmoduls 6, so werden die Zugkräfte von dem Fixierelement 21 aufgenommen. Auf diese Weise kann verhindert werden, dass die elektrische Verbindung zwischen der einen oder den mehreren Leitungen 13 und der Motorplatine 7 und/oder dem Antriebsmotor 5 getrennt wird. Die Sicherheit der Antriebseinheit 1 kann somit auf einfache Weise verbessert werden.

Gemäß einer weiteren Lehre, der eigenständige Bedeutung zukommt, wird ein Antrieb 2, insbesondere Spindelantrieb, zur Verstellung eines Verstellelements 3 eines Kraftfahrzeugs, vorgeschlagen, wobei der Antrieb 2 eine vorschlagsgemäße Antriebseinheit 1 aufweist, wobei der Antrieb 2 ein mit der Antriebseinheit 1 antriebstechnisch gekoppeltes Vorschubgetriebe 9, insbesondere Spindel-Spindelmuttergetriebe, zur Erzeugung von Antriebsbewegungen entlang einer geometrischen Antriebsachse A zwischen einem ersten Antriebsanschluss 14 und einem zweiten Antriebsanschluss 22 aufweist. Auf alle Ausführungen zum Spindelantrieb 1 darf insoweit verwiesen werden.

Gemäß einer weiteren Lehre, der eigenständige Bedeutung zukommt, wird ein Verfahren zur Montage einer Antriebseinheit 1 für einen Antrieb 2 insbesondere Spindelantrieb, zur Verstellung eines Verstellelements 3 eines Kraftfahrzeugs, vorgeschlagen, wobei im montierten Zustand die Antriebseinheit 1 eine dynamische Einheit 4 mit einem Antriebsmotor 5, ein Kabelmodul 6 mit einer Motorplatine 7 sowie ein Antriebseinheitsgehäuse 8 zur Aufnahme zumindest des Antriebsmotors 5 und des Kabelmoduls 6 aufweist, wobei das Kabelmodul 6 zur Fixierung der Motorplatine 7 einen Platinenhalter 11 und einen Kabelmoduldeckel 12, in den ein oder mehrere Leitungen 13 zur elektrischen Verbindung mit dem Antriebsmotor 5 und/oder der Motorplatine 7 führen, sowie einen ersten Antriebsanschluss 14, der mit dem Kabelmoduldeckel 12 verbunden ist aufweist, wobei die dynamische Einheit 4 mit dem Kabelmodul 6 axialfest verbunden ist. Auf alle Ausführungen zur vorschlagsgemäßen Antriebseinheit 1 darf insoweit verwiesen werden.

Wesentlich ist nun, dass die dynamische Einheit 4 und das Kabelmodul 6 jeweils als Funktionseinheit vormontiert werden, dass im vormontierten Zustand des Kabelmoduls 6 der Kabelmoduldeckel 12 axialfest und insbesondere drehfest mit einem Platinenhalter 11 verbunden ist, dass durch eine Montagebewegung das vormontierte Kabelmodul 6 mit der vormontierten dynamischen Einheit 4 zusammengeführt wird und, insbesondere hierdurch, der Antriebsmotor 5 mit der Motorplatine 7 und/oder einer oder mehrerer Leitungen 13 elektrisch verbunden und der Kabelmoduldeckel 12 von dem Platinenhalter 11 entkoppelt wird.

## Patentansprüche

1. Antriebseinheit für einen Antrieb (2), insbesondere Spindelantrieb, zur Verstellung eines Verstellelements (3) eines Kraftfahrzeugs entlang einer geometrischen Antriebsachse (A), wobei die Antriebseinheit (1) eine dynamische Einheit (4) mit einem Antriebsmotor (5), ein Kabelmodul (6) mit einer Motorplatine (7) sowie ein Antriebseinheitsgehäuse (8) zur Aufnahme zumindest des Antriebsmotors (5) und des Kabelmoduls (6) aufweist,
wobei das Kabelmodul (6) zur Fixierung der Motorplatine (7) einen Platinenhalter (11) und einen Kabelmoduldeckel (12), in den eine oder mehrere Leitungen (13) zur elektrischen Verbindung mit dem Antriebsmotor (5) und/oder der Motorplatine (7) führen, sowie einen ersten Antriebsanschluss (14), der mit dem Kabelmoduldeckel (12) verbunden ist, und eine geometrische Kabelmodulachse (B) aufweist, wobei die dynamische Einheit (4) mit dem Kabelmodul (6) axialfest verbunden ist,
wobei das Kabelmodul (6) als vormontierte Funktionseinheit ausgestaltet ist, und im Rahmen der Montage der Antriebseinheit (1) durch eine Montagebewegung das vormontierte Kabelmodul (6) mit der dynamischen Einheit (4) zusammenführbar ist, **dadurch gekennzeichnet, dass** durch die Montagebewegung das Kabelmodul (6) von einem Montagezustand, in dem der Kabelmoduldeckel (12) axialfest und insbesondere drehfest mit dem Platinenhalter (11) verbunden ist, in einen Entkopplungszustand, in dem der Kabelmoduldeckel (12) von dem Platinenhalter (11) entkoppelt ist, wobei der Kabelmoduldeckel (12) und der Platinenhalter (11) zur Erreichung einer akustische Entkopplung zwischen Kabelmoduldeckel (12) und Platinenhalter (11) nicht mehr miteinander in Kontakt sind, bringbar ist.

2. Antriebseinheit nach Anspruch 1, **dadurch gekennzeichnet, dass** im Rahmen der Montage der Antriebseinheit (1) durch die Montagebewegung, zusätzlich zu der Entkopplung zwischen dem Kabelmoduldeckel (12) und dem Platinenhalter (11), auch eine elektrische Verbindung des Antriebsmotors (5) mit der Motorplatine (7) und/oder der einen oder den mehreren Leitungen (13) erfolgt.

3. Antriebseinheit nach Anspruch 2, **dadurch gekennzeichnet, dass** die elektrische Verbindung des Antriebsmotors (5) mit der Motorplatine (7) und/oder der einen oder den mehreren Leitungen (13) im Wesentlichen zeitlich überlappend mit der Entkopplung zwischen dem Kabelmoduldeckel (12) und dem Platinenhalter (11) erfolgt.

4. Antriebseinheit nach Anspruch 2, **dadurch gekennzeichnet, dass** durch die Montagebewegung in einem ersten Abschnitt der Montagebewegung eine elektrische Verbindung des Antriebsmotors (5) mit der Motorplatine (7) und/oder der einen oder den mehreren Leitungen (13) erfolgt und dass in einem auf den ersten Abschnitt folgenden zweiten Abschnitt der Montagebewegung die Entkopplung zwischen dem Kabelmoduldeckel (12) und dem Platinenhalter (11) erfolgt.

5. Antriebseinheit nach einem der vorhergehenden Ansprüche, **dadurch gekennzeichnet, dass** der Kabelmoduldeckel (12) im montierten Zustand der Antriebseinheit (1) durch eine kraft-, stoff- und/oder formschlüssige Verbindung mit dem Antriebseinheitsgehäuse (8) axialfest und insbesondere drehfest verbunden ist, vorzugsweise, dass der Kabelmoduldeckel (12) im Rahmen der Montagebewegung wenigstens abschnittsweise axial in das Antriebseinheitsgehäuse (8) einschiebbar oder axial auf das Antriebseinheitsgehäuse (8) aufschiebbar ist und/oder die Montagebewegung oder ein Abschnitt der Montagebewegung zusätzlich zu einer axialen eine radiale und/oder eine tangentiale Komponente aufweist.

6. Antriebseinheit nach einem der vorhergehenden Ansprüche, **dadurch gekennzeichnet, dass** das Kabelmodul (6) wenigstens einen elektrischen Anschlussstecker (15), der mit wenigstens einer Leitung (13) des Kabelmoduls (6) elektrisch verbunden ist, aufweist, und dass das Zusammenführen des Kabelmoduldeckels (12) mit der dynamischen Einheit (4) eine elektrische Verbindung zwischen dem elektrischen Anschlussstecker (15) und einem korrespondierenden Anschlussteil (16) des Antriebsmotors (5) bewirkt.

7. Antriebseinheit nach einem der vorhergehenden Ansprüche, **dadurch gekennzeichnet, dass** der Platinenhalter (11) im montierten Zustand der Antriebseinheit (1) in einer axialen Richtung gegen den Antriebsmotor (5) und in der anderen axialen Richtung über ein Dämpfungselement (17) gegen den Kabelmoduldeckel (12) anliegt.

8. Antriebseinheit nach einem der vorhergehenden Ansprüche, **dadurch gekennzeichnet, dass** im Rahmen einer Vormontage des Kabelmoduls (6) der Kabelmoduldeckel (12) mit dem Platinenhalter (11) zusammenführbar und, insbesondere hierdurch, axialfest und drehfest verbindbar ist.

9. Antriebseinheit nach einem der Ansprüche 1 bis 7, **dadurch gekennzeichnet, dass** im Montagezustand der Kabelmoduldeckel (12) und der Platinenhalter (11) einstückig, insbesondere mit einer Sollbruchstelle, miteinander ausgebildet sind, vorzugsweise, dass im Entkopplungszustand der Kabelmoduldeckel (12) und der Platinenhalter (11) an der Sollbruchstelle getrennt sind.

10. Antriebseinheit nach einem der vorhergehenden Ansprüche, **dadurch gekennzeichnet, dass** die aufzubringende Kraft zur Durchführung der Montagebewegung 30 N bis 200 N, weiter vorzugsweise 50 N bis 150 N, weiter vorzugsweise 70 N bis 100 N, beträgt.

11. Antriebseinheit nach Anspruch 4 und gegebenenfalls nach einem der Ansprüche 5 bis 10, **dadurch gekennzeichnet, dass** die aufzubringende Kraft zur Durchführung der Montagebewegung während des ersten Abschnitts geringer ist als während oder zu Beginn des zweiten Abschnitts der Montagebewegung.

12. Antriebseinheit nach einem der vorhergehenden Ansprüche, **dadurch gekennzeichnet, dass** der Platinenhalter (11) ein Fixierelement (21) zu Fixierung der einen oder mehreren Leitungen (13) relativ zum Platinenhalter (11) aufweist, wodurch eine Zugentlastung der einen oder mehreren Leitungen (13) realisiert ist.

13. Antrieb, insbesondere Spindelantrieb, zur Verstellung eines Verstellelements (3) eines Kraftfahrzeugs, wobei der Antrieb (2) eine Antriebseinheit (1) nach einem der vorhergehenden Ansprüche aufweist, wobei der Antrieb (2) ein mit der Antriebseinheit (1) antriebstechnisch gekoppeltes Vorschubgetriebe (9), insbesondere Spindel-Spindelmuttergetriebe, zur Erzeugung von Antriebsbewegungen entlang einer geometrischen Antriebsachse (A) zwischen einem ersten Antriebsanschluss (14) und einem zweiten Antriebsanschluss (22) aufweist.

14. Verfahren zur Montage einer Antriebseinheit nach einem der Ansprüche 1 bis 12 für einen Antrieb (2), insbesondere Spindelantrieb, zur Verstellung eines Verstellelements (3) eines Kraftfahrzeugs entlang einer geometrischen Antriebsachse (A), wobei im montierten Zustand die Antriebseinheit (1) eine dynamische Einheit (4) mit einem Antriebsmotor (5), ein Kabelmodul 6) mit einer Motorplatine (7) sowie ein Antriebseinheitsgehäuse (8) zur Aufnahme zumindest des Antriebsmotors (5) und des Kabelmoduls (6) aufweist, wobei das Kabelmodul (6) zur Fixierung der Motorplatine (7) einen Platinenhalter (11) und einen Kabelmoduldeckel (12), in den eine oder mehrere Leitungen (13) zur elektrischen Verbindung mit dem Antriebsmotor (5) und/oder der Motorplatine (7) führen, sowie einen ersten Antriebsanschluss (14), der mit dem Kabelmoduldeckel (12) verbunden ist, und eine geometrische Kabelmodulachse (B) aufweist, wobei die dynamische Einheit (4) mit dem Kabelmodul (6) axialfest verbunden ist,
wobei das Kabelmodul (6) als Funktionseinheit vormontiert wird, und
im vormontierten Zustand des Kabelmoduls (6) der Kabelmoduldeckel (12) axialfest und insbesondere drehfest mit einem Platinenhalter (11) verbunden ist,
**dadurch gekennzeichnet,**
**dass** durch eine Montagebewegung das vormontierte Kabelmodul (6) mit der dynamischen Einheit (4) zusammengeführt wird und, insbesondere hierdurch, der Antriebsmotor (5) mit der Motorplatine (7) und/oder der einen oder den mehreren Leitungen (13) elektrisch verbunden und der Kabelmoduldeckel (12) von dem Platinenhalter (11) entkoppelt wird.

## Claims

1. A drive unit for a drive (2), in particular spindle drive, for adjusting an adjustment element (3) of a motor vehicle along a geometric drive axis (A), wherein the drive unit (1) comprises a dynamic unit (4) comprising a drive motor (5), a cable module (6) comprising a motor circuit board (7), as well as a drive unit housing (8) for receiving at least the drive motor (5) and the cable module (6),
wherein the cable module (6) for fixing the motor circuit board (7) comprises a circuit board holder (11) and a cable module cover (12), into which one or multiple cables (13) for electrical connection to the drive motor (5) and/or the motor circuit board (7) are routed, and a first drive connection (14), which is connected to the cable module cover (12), and a geometric cable module axis (B), wherein the dynamic unit (4) is connected to the cable module (6) in an axially fixed manner,
wherein, the cable module (6) is designed as a pre-assembled functional unit and the pre-assembled cable module (6) can be brought together with the dynamic unit (4) by an assembly movement during assembly of the drive unit (1),
**characterized in that**
by the assembly movement the cable module (6) can be brought from an assembled state, in which the cable module cover (12) is connected to the circuit board holder (11) in an axially fixed manner and, in particular, for conjoint rotation therewith, into a decoupling state, in which the cable module cover (12) is decoupled from the circuit board holder (11),
wherein the cable module cover (12) and the circuit board holder (11) are no longer in contact with one another in order to achieve acoustic decoupling between the cable module cover (12) and circuit board holder (11).

2. The drive unit according to Claim 1, **characterized in that** during the assembly of the drive unit (1), in addition to the decoupling between the cable module cover (12) and the circuit board holder (11), the assembly movement also electrically connects the drive motor (5) to the motor circuit board (7) and/or to one or multiple cables (13).

3. The drive unit according to Claim 2, **characterized in that** the electrical connection of the drive motor (5) to the motor circuit board (7) and/or to one or multiple cables (13) substantially overlaps in time with the decoupling between the cable module cover (12) and the circuit board holder (11).

4. The drive unit according to Claim 2, **characterized in that** the assembly movement in a first section of the assembly movement electrically connects the drive motor (5) to the motor circuit board (7) and/or to the one or the multiple cables (13), and **in that** decoupling between the cable module cover (12) and the circuit board holder (11) takes places in a second section of the assembly movement following the first section.

5. The drive unit according to one of the preceding claims, **characterized in that** the cable module cover (12) is connected to the drive unit housing (8) in an axially fixed manner and, in particular, for conjoint rotation therewith in the assembled state of the drive unit (1) by a frictionally engaged, integrally bonded and/or form-fit connection, preferably **in that** the cable module cover (12) can be pushed at least in sections axial into the drive unit housing (8) or can be pushed axially onto the drive unit housing (8) and/or the assembly movement or a section of the assembly movement comprises a radial and/or a tangential component in addition to an axial component.

6. The drive unit according to one of the preceding claims, **characterized in that** the cable module (6) comprises at least one electrical connection plug (15), which is electrically connected to at least one cable (13) of the cable module (6), and wherein the bringing together of the cable module cover (12) with the dynamic unit (4) brings about an electrical connection between the electrical connection plug (15) and a corresponding connection part (16) of the drive motor (5).

7. The drive unit according to one of the preceding claims, **characterized in that** the circuit board holder (11) lies against the drive motor (5) in one axial direction and against the cable module cover (12) in the other axial direction via a damping element (17) in the assembled state of the drive unit (1).

8. The drive unit according to one of the preceding claims, **characterized in that** the cable module cover (12) can be brought together with the circuit board holder (11) during pre-assembly of the cable module (6) and, in particular hereby, can be connected in an axially fixed manner and for conjoint rotation.

9. The drive unit according to one of Claims 1 to 7, **characterized in that** in the assembly state the cable module cover (12) and the circuit board holder (11) are designed in one piece with each other, in particular with a predetermined breaking point, preferably **in that** in the decoupled state the cable module cover (12) and the circuit board holder (11) are separated at the predetermined breaking point.

10. The drive unit according to one of the preceding claims, **characterized in that** the force to be applied to perform the assembly movement is 30 N to 200 N, more preferably 50 N to 150 N, more preferably 70 N to 100 N.

11. The drive unit according to Claim 4 and optionally according to one of Claims 5 to 10, **characterized in that** the force to be applied to perform the assembly movement during the first section is less than during or at the beginning of the second section of the assembly movement.

12. The drive unit according to one of the preceding claims, **characterized in that** the circuit board holder (11) comprises a fixing element (21) for fixing the one or multiple cables (13) relative to the circuit board holder (11), whereby strain relief of the one or multiple cables (13) is realized.

13. A drive, in particular spindle drive, for adjusting an adjustment element (3) of a motor vehicle, wherein the drive (2) comprises a drive unit (1) according to one of the preceding claims, wherein the drive (2) comprises a feed gear (9), in particular a spindle-spindle nut gear, coupled to the drive unit (1) in terms of drive technology, for generating drive movements along a geometric drive axis (A) between a first drive connection (14) and a second drive connection (22).

14. A method for assembling a drive unit according to one of Claims 1 to 12 for a drive (2), in particular spindle drive, for adjusting an adjustment element (3) of a motor vehicle along a geometric drive axis (A), wherein in the assembled state the drive unit (1) comprises a dynamic unit (4) comprising a drive motor (5), a cable module (6) comprising a motor circuit board (7) as well as a drive unit housing (8) for receiving at least the drive motor (5) and the cable module (6), wherein the cable module (6) for fixing the motor circuit board (7) comprises a circuit board holder (11) and a cable module cover (12), into which one or multiple cables (13) for electrical connection to the drive motor (5) and/or the motor circuit board (7) are routed, and a first drive connection (14) which is connected to the cable module cover (12) and a geometric cable module axis (B), wherein the dynamic unit (4) is connected to the cable module (6) in an axially fixed manner,
wherein the cable module (6) is pre-assembled as a functional unit and, in the pre-assembled state of the cable module (6), the cable module cover (12) is connected to a circuit board holder (11) in an axially fixed manner and, in particular, for conjoint rotation therewith,
**characterized in that**
the pre-assembled cable module (6) is brought together with the dynamic unit (4) by an assembly movement and, in particular hereby, the drive motor (5) is electrically connected to the motor circuit board (7) and/or to the one or the multiple cables (13) and the cable module cover (12) is decoupled from the circuit board holder (11).

## Revendications

1. Unité d'entraînement pour un entraînement (2), en particulier un entraînement à broche, pour le réglage d'un élément de réglage (3) d'un véhicule automobile le long d'un axe d'entraînement géométrique (A), l'unité d'entraînement (1) comprenant une unité dynamique (4) comportant un moteur d'entraînement (5), un module de câble (6) comportant une carte de moteur (7) et un boîtier d'unité d'entraînement (8) pour recevoir au moins le moteur d'entraînement (5) et le module de câble (6),
le module de câble (6) comprenant, pour la fixation de la carte de moteur (7), un support de carte (11) et un couvercle de module de câble (12) dans lequel passent une ou plusieurs lignes (13) pour le raccordement électrique au moteur d'entraînement (5) et/ou à la carte de moteur (7), ainsi une première liaison d'entraînement (14) qui est reliée au couvercle de module de câble (12), et un axe géométrique de module de câble (B), l'unité dynamique (4) étant reliée axialement à demeure au module de câble (6),
le module de câble (6) étant conçu sous la forme d'une unité fonctionnelle préassemblée et, dans le cadre de l'assemblage de l'unité d'entraînement (1), le module de câble préassemblé (6) pouvant être relié à l'unité dynamique (4) au moyen d'un mouvement d'assemblage, **caractérisé en ce que**,
au moyen du mouvement d'assemblage, le module de câble (6) peut être amené d'un état d'assemblage, dans lequel le couvercle de module de câble (12) est relié au support de carte (11) de façon à être fixé axialement et en particulier pour une rotation conjointe avec celui-ci, à un état de découplage, dans lequel le couvercle de module de câble (12) est découplé du support de carte (11), le couvercle de module de câble (12) et le support de carte (11) n'étant plus en contact l'un avec l'autre pour l'obtention d'un découplage acoustique entre le couvercle de module de câble (12) et le support de carte (11).

2. Unité d'entraînement selon la revendication 1, **caractérisée en ce que**, dans le cadre de l'assemblage de l'unité d'entraînement (1), le mouvement d'assemblage, outre le découplage entre le couvercle de module de câble (12) et le support de carte (11), assure également une liaison électrique du moteur d'entraînement (5) avec la carte de moteur (7) et/ou avec la ou les lignes (13).

3. Unité d'entraînement selon la revendication 2, **caractérisée en ce que** la liaison électrique du moteur d'entraînement (5) avec la carte de moteur (7) et/ou la ou les lignes (13) a lieu de manière sensiblement superposée temporellement au découplage entre le couvercle de module de câble (12) et le support de carte (11).

4. Unité : d'entraînement selon la revendication 2, **caractérisée en ce que**, par le mouvement d'assemblage, une liaison électrique du moteur d'entraînement (5) avec la carte de moteur (7) et/ou la ou les lignes (13) a lieu dans une première section du mouvement d'assemblage, et **en ce que** le découplage entre le couvercle de module de câble (12) et le support de carte (11) a lieu dans une deuxième section du mouvement d'assemblage faisant suite à la première section.

5. Unité d'entraînement selon l'une quelconque des revendications précédentes, **caractérisée en ce que** le couvercle de module de câble (12) dans l'état assemblé de l'unité d'entraînement (1) est relié au boîtier d'unité d'entraînement (8) de façon à être fixé axialement et en particulier pour une rotation conjointe avec celui-ci par une liaison par complémentarité de force, de matériau et/ou de forme, de préférence **en ce que** le couvercle de module de câble (12), dans le cadre du mouvement d'assemblage, peut être poussé axialement au moins par sections dans le boîtier d'unité d'entraînement (8) ou poussé axialement sur le boîtier d'unité d'entraînement (8), et/ou le mouvement d'assemblage ou une section du mouvement d'assemblage présente en plus d'une composante axiale une composante radiale et/ou une composante tangentielle.

6. Unité d'entraînement selon l'une quelconque des revendications précédentes, **caractérisée en ce que** le module de câble (6) comporte au moins une fiche de connexion électrique (15) qui est reliée électriquement à au moins une ligne (13) du module de câble (6). et **en ce que** l'assemblage du couvercle de module de câble (12) avec l'unité dynamique (4) provoque une liaison électrique entre la fiche de connexion électrique (15) et une partie de connexion (16) correspondante du moteur d'entraînement (5).

7. Unité d'entraînement selon l'une quelconque des revendications précédentes, **caractérisée en ce que** le support de carte (11), à l'état assemblé de l'unité d'entraînement (1), s'appuie dans une direction axiale contre le moteur d'entraînement (5) et dans l'autre direction axiale, par l'intermédiaire d'un élément d'amortissement (17), contre le couvercle de module de câble (12).

8. Unité d'entraînement selon l'une quelconque des revendications précédentes, **caractérisée en ce que**, dans le cadre d'un préassemblage du module de câble (6), le couvercle de module de câble (12) peut être assemblé avec le support de carte (11) et en particulier, par ce biais, peut être relié axialement à demeure et pour une rotation conjointe.

9. Unité d'entraînement selon l'une quelconque des revendications 1 à 7, **caractérisée en ce qu'**à l'état assemblé, le couvercle de module de câble (12) et le support de carte (11) sont réalisés d'un seul tenant, en particulier avec un point de rupture prédéterminé, de préférence **en ce qu'**à l'état découplé, le couvercle de module de câble (12) et le support de carte (11) sont séparés au niveau du point de rupture prédéterminé.

10. Unité d'entraînement selon l'une quelconque des revendications précédentes, **caractérisée en ce que** la force à appliquer pour effectuer le mouvement d'assemblage est de 30 N à 200 N, de préférence de 50 N à 150 N, plus préférentiellement de 70 N à 100 N.

11. Unité d'entraînement selon la revendication 4 et le cas échéant selon l'une quelconque des revendications 5 à 10, **caractérisée en ce que** la force à appliquer pour effectuer le mouvement d'assemblage est inférieure pendant la première section à sa valeur pendant ou au début de la deuxième section du mouvement d'assemblage.

12. Unité d'entraînement selon l'une quelconque des revendications précédentes, **caractérisée en ce que** le support de carte (11) présente un élément de fixation (21) pour fixer la ou les lignes (13) par rapport au support de carte (11), ce qui permet d'obtenir une décharge de traction de la ou des lignes (13).

13. Entraînement, en particulier entraînement à broche, pour le réglage d'un élément de réglage (3) d'un véhicule automobile, l'entraînement (2) comportant une unité d'entraînement (1) selon l'une quelconque des revendications précédentes, l'entraînement (2) comportant un mécanisme d'avance (9), en particulier un mécanisme à broche-écrou, qui est couplé en entraînement à l'unité d'entraînement (1) afin de générer des mouvements d'entraînement le long d'un axe d'entraînement géométrique (A) entre une première liaison d'entraînement (14) et une deuxième liaison d'entraînement (22).

14. Procédé d'assemblage d'une unité d'entraînement selon l'une quelconque des revendications 1 à 12 pour un entraînement (2), en particulier un entraînement à broche, pour le réglage d'un élément de réglage (3) d'un véhicule automobile le long d'un axe d'entraînement géométrique (A),
l'unité d'entraînement (1), à l'état assemblé, comprenant une unité dynamique (4) comportant un moteur d'entraînement (5), un module de câble (6) comportant une carte de moteur (7) et un boîtier d'unité d'entraînement (8) pour recevoir au moins le moteur d'entraînement (5) et le module de câble (6), le module de câble (6) comprenant, pour la fixation de la carte de moteur (7), un support de carte (11) et un couvercle de module de câble (12) dans lequel passent une ou plusieurs lignes (13) pour le raccordement électrique au moteur d'entraînement (5) et/ou à la carte de moteur (7), ainsi qu'une première liaison d'entraînement (14) qui est reliée au couvercle de module de câble (12), et un axe géométrique de module de câble (B), l'unité dynamique (4) étant reliée axialement à demeure au module de câble (6), le module de câble (6) étant préassemblé sous la forme d'une unité fonctionnelle et, à l'état préassemblé du module de câble (6), le couvercle de module de câble (12) étant relié axialement à demeure et en particulier de façon à être fixé en rotation à un support de carte (11), **caractérisé en ce que**,
au moyen d'un mouvement d'assemblage, le module de câble (6) préassemblé est assemblé avec l'unité dynamique (4) par un mouvement d'assemblage et en particulier, par ce biais, le moteur d'entraînement (5) est relié électriquement à la carte de moteur (7) et/ou à la ou aux lignes (13), et le couvercle de module de câble (12) est découplé du support de carte (11).
